# NEUE EUROPÄISCHE PATENTSCHRIFT

(11) **EP 1 099 862 B2**
(45) Veröffentlichungstag und Bekanntmachung des Hinweises auf die Entscheidung über den Einspruch: **28.07.2010**
(45) Hinweis auf die Patenterteilung: 30.08.2006
(21) Anmeldenummer: 00120814.9
(22) Anmeldetag: 23.09.2000
(51) Int. Cl.: F16B 7/18

(54) **Bausatz aus Rohren und Gewindestangen**
Assembly of pipes and threaded rods
Ensemble de tuyaux et tiges filetées

(30) Priorität: 11.11.1999 DE 19954303
(43) Veröffentlichungstag der Anmeldung: 16.05.2001
(73) Patentinhaber: alfer-aluminium Gesellschaft mbH, D-79793 Wutöschingen-Horheim (DE)
(72) Erfinder: Wilbs, Thomas, 79777 Ühlingen-Birkendorf (DE); Speicher, Thomas, 79761 Waldshut-Tiengen (DE)
(74) Vertreter: Vonnemann, Gerhard

(56) Entgegenhaltungen:
- EP-A2- 0 314 357
- DE-A- 3 148 210
- DE-AS- 1 627 531
- DE-A1- 19 511 006
- DE-C2- 4 022 854
- DE-C2- 4 419 558
- DE-PS- 366 870
- DE-T2- 69 502 474
- FR-A- 2 410 162
- FR-A- 2 668 558
- GB-A- 2 101 258
- US-A- 2 035 488
- US-A- 3 004 743
- US-A- 5 826 847
- US-A- 5 897 268
- DEUTSCHES INSTITUT FÜR NORMUNG E.V.: "DIN 13 Teil 1" November 1999 (1999-11) , BEUTH VERLAG GMBH , BERLIN XP002181194 * Seite 3 *
- G. NIEMANN: 'Konstruktion und Berechnung von Verbindungen,Lagern,Wellen' MASCHINENELEMENTE 01 Januar 1975, SPRINGER-VERLAG BERLIN HEIDELBER NEW YORK, Seiten 142 - 143
- 'Gruppe 42-187/982 Profile' PROSPEKT GAH ALBERTS 15 März 1998, Seiten 01 - 28
- BAU-UND HEIMWERKERPROFILE: 'Teppichschienene Bleche Preisliste' GAH ALBERTS 15 März 1996,
- BAU-UND HEIMWERKERPROFILE: 'Teppichschienen Bleche Prospekt' GAH ALBERTS 15 März 1997,
- PROFILE AUS ALUMINIUM MEESING STAHL UND KUNSTOFF: 'Bleche fertig zugeschnitten Preisliste' 01 März 1990,
- EDI: 'Preisliste N°2' 01 Januar 1984,
- CQFD: 'Tarif' 01 Januar 1990, Seiten 1 - 20

## Beschreibung

Die Erfindung betrifft einen Bausatz aus Gewindestangen und Rohren.

Gewindestangen und Rohre sind für Konstruktions- und Bastelarbeiten vielfach im Gebrauch. Die Anwendungsgebiete sind nahezu unbegrenzt. Es werden Möbel, Regalkonstruktionen, einfache technische Aufbauten bis hin zu komplizierteren Apparaten gefertigt. Auch der Einsatz im Haushalt, z.B. als Gardinenstange, Scharnier oder Halterung für Tischplatten etc. ist denkbar.

Vor allem die Kombination von Gewindestangen mit Rohren, oder von Rohren untereinander bereitet große Schwierigkeiten. Oftmals steht für das benötigte Nennmaß einer Gewindestange kein Rohr mit genügend großen Innendurchmesser zum Umhüllen der Gewindestange zur Verfügung. Sehr schwierig wird es dann, wenn zu der passenden Gewindestangen-Rohr-Kombination noch ein passendes, zusätzliches Rohr gefunden werden soll, das das die Gewindestange umschließende Rohr mit Abstand umhüllt. Bei der Auswahl ist dann nicht nur auf den Innendurchmesser des die Gewindestange umhüllenden Rohres zu achten, sondern es muß zusätzlich auf die richtige Wahl des Außendurchmessers dieses Rohres Augenmerk gelegt werden. Diese Probleme vervielfachen sich bei Konstruktionen, in denen mehrere Rohre teleskopartig ineinander geschoben werden sollen.

Aus dem Katalog GAH ALBERTS "Profile" Gruppe 42-187/982 ist bekannt, dass die Gewindestangen M5, M8, M12, M16 von einem Rundrohr mit einem Spiel von 1 mm umhüllbar sind. Aus diesem Katalog sind auch Rundrohre bekannt, die als nächstgrößere Gewindestangen-Rundrohr-Zuordnung das Rohr der nächstkleineren Gewindestangen-Rohr-Zuordnung, mit einem Abstand von 1 mm umhüllen können.

Aufgabe der Erfindung ist es, einen Bausatz von Gewindestangen und Rohren anzugeben, bei dem viele Kombinationsmöglichkeiten von Gewindestangen mit Rohren bzw. von Rohren untereinander möglich sind.

Diese Aufgabe wird erfindungsgemäß durch einen Bausatz entsprechend der Ansprüche 1 und 9 gelöst.

Durch die Verwendung dieses Bausatzes ergeben sich sehr viele Kombinationsmöglichkeiten von Gewindestangen mit Rohren und von Rohren untereinander. Die zeitraubende Suche nach passenden Gewindestangen und Rohren entfällt. Dies ist besonders für Personen mit geringem technischen Vorkenntnissen von Vorteil, da für im Handel erhältliche Rohre oftmals nicht alle technischen Angaben bezüglich Innendurchmesser und Rohrwandstärke ersichtlich sind. Man erhält mit nur einem Bausatz die Möglichkeit, beispielsweise Rohre als Führungsschiene oder Drehgelenke zu nutzen. Besonders vorteilhaft ist es, daß die Rohre teleskopartig ineinander steckbar sind.

Ein besonders vorteilhafter Bausatz bestehend aus Gewindestangen und Rohren beinhaltet eine erste Gruppe von metrischen Gewindestangen nach der Norm DIN 13 T 1 in der Abstufung M8, M12, M16 und M20, wobei jeder Gewindestange ein Rohr zugeordnet ist, das ein um etwa 3,5 mm größeres Außenmaß als das Nennmaß der zugehörigen Gewindestange aufweist. Die Kombination erlaubt unter anderem das teleskopartige Ineinanderstecken aller im Bausatz enthaltenen Rohre. Ein weiterer großer Vorteil dieser Kombination besteht darin, daß es sich ausschließlich um genormte handelsübliche Gewindestangen mit gebräuchlichen Nenndurchmessern handelt. Dadurch wird die Kombinationsvielfalt weiter erhöht, da handelsübliche Muttern und sonstige Gewindeaufsätze mit dem Bausatz kombinierbar sind.

Eine besonders vorteilhafte Ausführungsform der Erfindung sieht vor, daß die zu den Gewindestangen mit der Stufung M8, M12, M16, M20 gehörenden Rohre, eine Rohrwandstärke von 1,5 mm aufweisen. Der Abstand zwischen Gewindestange und innerer Rohrwand des zu einer Gewindestange gehörenden Rohres ist dann in etwa immer gleich, wodurch immer das gleiche Spiel der Spielpassung bei der Verwendung in der Kombination Gewindestange-Rohr gegeben ist. Auch die Spielpassung der Gewindestangen - Rohr - Zuordnungen bleibt unverändert.

Gemäß einer weiteren Ausführungsform ist es mit Vorteil möglich, die erste Gruppe von metrischen Gewindestangen mit der Abmessung M5 zu erweitern. Das dieser Gewindestange zugeordnete Rohr weist ein Außenmaß von etwa 7,5 mm auf und die Rohrwand ist in einer Stärke von etwa 1 mm ausgebildet. Durch diese Erweiterung ist es möglich, den Bausatz für Anwendungen zu nutzen, in denen Gewinde mit relativ kleinem Nenndurchmesser benötigt werden. Das dieser Gewindestange zugeordnete Rohr läßt sich problemlos in das nächst größere Rohr dieser Gruppe einführen.

Besonders vorteilhaft ist es, die erste Gruppe von metrischen Gewindestangen um Gewindestangen mit den metrischen Nennmaßen M24 und M30 zu erweitern. Jeder dieser Gewindestangen ist ein Rohr zugeordnet, das ein um etwa 5,5 mm größeres Außenmaß als das Nennmaß der zugehörigen Gewindestange aufweist, wobei die Rohrwand in einer Rohrstärke von etwa 2,4 mm ausgebildet ist. Durch diese Erweiterung ist es möglich, den Bausatz für Anwendungen zu nutzen, in denen Gewinde mit relativ großem Nenndurchmesser benötigt werden. Die diesen Gewindestangen zugeordneten Rohre lassen sich problemlos mit den Rohren der ersten Gruppe kombinieren.

Ein weiterer besonders vorteilhafter Bausatz besteht aus Gewindestangen und Rohren, die eine zweite Gruppe von metrischen Gewindestangen nach der Norm DIN 13 T 1 in der Abstufung M6, M10, M14 und M18 beinhaltet, wobei jeder Gewindestange ein Rohr zugeordnet ist, das ein um etwa 3,5 mm größeres Außenmaß als das Nennmaß der zugehörigen Gewindestange aufweist. Auch diese Kombination erlaubt unter anderem das teleskopartige Ineinanderstecken aller im Bausatz enthaltenen Rohre. Ein weiterer großer Vorteil dieser Kombination besteht darin, daß es sich auch bei den in diesem Bausatz verwendeten Gewindestangen ausschließlich um genormte handelsübliche Gewindestangen mit genormten Nenndurchmessern handelt. Dadurch wird die Kombinationsvielfalt weiter erhöht, da handelsübliche Muttern und sonstige verbreitete Gewindeaufsätze kombinierbar sind.

Eine besonders vorteilhafte Ausführungsform der Erfindung sieht vor, daß die zu den Gewindestangen mit der Stufung M6, M10, M14, M18 gehörenden Rohre, eine Rohrwandstärke von 1,5 mm aufweisen. Der Abstand zwischen Gewindestange und innerer Rohrwand des zu einer Gewindestange gehörenden Rohres ist dann in etwa immer gleich, wodurch immer dieselbe Spielpassung bei der Verwendung in der Kombination Gewindestange-Rohr gegeben ist. Auch die Spielpassung bei der Verwendung von Rohrkombinationen bleibt unverändert.

Gemäß einer weiteren Ausführungsform der Erfindung ist es möglich, die zweite Gruppe von metrischen Gewindestangen mit Gewindestangen mit den metrischen Nenndurchmessern M22 und M27 zu erweitern, wobei der Gewindestange mit dem Nennmaß M22 ein Rohr mit einem Außenmaß von etwa 26,5 mm und der Gewindestange mit dem Nennmaß M27 ein Rohr mit einem Außenmaß von etwa 32,5 mm zugeordnet ist. Die Rohrwandstärke des Rohres mit dem Außenmaß von 26,5 mm beträgt etwa 1,9 mm und die Rohrwandstärke des Rohres mit dem Außenmaß von 32,5 mm mißt etwa 2,4 mm. Durch diese Erweiterung ist es möglich, den Bausatz für Anwendungen zu nutzen, in denen Gewinde mit relativ großen Nenndurchmessern benötigt werden. Die diesen Gewindestangen zugeordneten Rohre lassen sich problemlos mit den Rohren der zweiten Gruppe kombinieren.

Eine weitere vorteilhafte Ausführungsform der Erfindung sieht vor, daß in einem Bausatz aus Gewindestangen und Rohren jeder Gewindestange ein Rohr mit quadratischem Profil zugeordnet ist, das die Gewindestange mit Abstand umschließt, und dessen äußere Seiten kürzer als die inneren Seiten des Quadratrohrprofils der nächst größeren Gewindestangen-Quadratrohr Zuordnung sind. Rohre mit quadratischem Querschnitt lassen sich ideal z.B. als Führungsschienen verwenden, wobei sie in der Länge durch die Möglichkeit des teleskopartigen Ineinandersteckens innerhalb eines Bausatzes beliebig verlängerbar sind. Auch ist die Kombination aus Gewindestange und Rohr für viele Anwendungen wie z.B. Regalkonstruktionen denkbar. Damit gelten alle für die Rundrohre beschriebenen Vorteile auch für Rohre mit quadratischem Profil. Es eröffnet sich die Möglichkeit aufgrund der Ähnlichkeit der Abmessungen von Rundrohr und Quadratrohr, nun auch diese zusätzlich zu kombinieren, so daß z.B. ein Rundrohr mit innen liegender Gewindestange in ein Rohr mit quadratischem Profil einschiebbar ist.

Gemäß einer weiteren Ausführungsform der Erfindung besteht der Bausatz aus einer ersten Gruppe von Gewindestangen, die metrische Abmessungen aufweisen, in der Stufung M8, M12, M16 und M20, wobei jeder Gewindestange ein Rohr mit quadratischem Profil zugeordnet ist, bei dem der äußere Abstand der gegenüberliegenden Seiten etwa 3,5 mm mehr als das Nennmaß der zugehörigen Gewindestange mißt.

Eine besonders vorteilhafte Ausführungsform der Erfindung sieht vor, daß die Rohrwand der zur ersten Gruppe von Gewindestangen gehörenden Rohre mit quadratischem Profil eine Rohrwandstärke von etwa 1,5 mm aufweist. Der Abstand zwischen Gewindestange und den Mittelpunkten der Seiten ist immer gleich, wodurch die Spielpassung immer dasselbe Spiel bei der Verwendung in der Kombination Gewindestange-Rohr aufweist. Auch die Spielpassung bei der Verwendung von Rohrkombinationen bleibt unverändert.

Gemäß einer weiteren Ausführungsform der Erfindung ist es möglich, die erste Gruppe von Gewindestangen zusätzlich um eine Gewindestange mit der metrischen Abmessung M5 zu erweitern, wobei der Gewindestange ein Rohr mit quadratischem Profil zugeordnet ist, bei dem der äußere Abstand der gegenüberliegenden Seiten etwa 7,5 mm beträgt und die Rohrwand in einer Stärke von etwa 1 mm ausgebildet ist.

Um die Kombinationsvielfalt weiter zu erhöhen, wird die erste Gruppe von Gewindestangen um Gewindestangen mit einem Nennmaß von M24 und M30 erweitert, denen jeweils ein Rohr mit quadratischem Profil zugeordnet ist, wobei der Abstand der äußeren Seiten etwa 5,5 mm mehr als das Nennmaß der zugehörigen Gewindestange mißt, und die Rohrwand in einer Rohrstärke von etwa 2,4 mm ausgebildet ist.

Gemäß einer weiteren Ausführungsform der Erfindung besteht der Bausatz aus einer zweiten Gruppe von Gewindestangen, die metrische Abmessungen aufweisen, in der Stufung M6, M10, M14 und M18, wobei jeder Gewindestange ein Rohr mit quadratischem Profil zugeordnet ist und der äußere Abstand der gegenüberliegenden Seiten etwa 3,5 mm mehr als das Nennmaß der zugehörigen Gewindestange mißt.

Eine weitere vorteilhafte Ausführungsform sieht vor, daß die Rohrwand der zur zweiten Gruppe von Gewindestangen gehörenden Rohre mit quadratischem Profil eine Rohrwandstärke von etwa 1,5 mm aufweist.

Gemäß einer weiteren Ausführungsform ist die zweite Gruppe von Gewindestangen um Gewindestangen mit einem Nennmaß von M22 und M27 erweitert, wobei der Gewindestange mit dem Nennmaß M22 ein Rohr mit quadratischem Profil zugeordnet ist, bei dem der äußere Abstand der gegenüberliegenden Seiten etwa 26,5 mm beträgt, und der Gewindestange mit dem Nennmaß M27 ein Rohr mit quadratischem Profil zugeordnet ist, bei dem der äußere Abstand der gegenüberliegenden Seiten etwa 32,5 mm mißt.

Gemäß einer besonders vorteilhaften Ausführungsform weist das zur Gewindestange mit dem metrischen Nenndurchmesser M22 gehörende Rohr mit quadratischem Profil eine Rohrwandstärke von etwa 1,9 mm und das zur Gewindestange mit dem metrischen Nenndurchmesser M27 gehörende Rohr eine Rohrwandstärke von etwa 2,4 mm auf.

Eine besonders vorteilhafte Ausführungsform der Erfindung sieht vor, daß jeder Gewindestange ein Rohr mit rechteckigem Profil zugeordnet ist, das die Gewindestange mit Abstand umschließt und dessen äußere Seiten kürzer als die entsprechenden inneren Seiten des rechteckigen Rohres der nächst größeren Gewindestangen-Rohr-Zuordnung sind. Durch die Erweiterung des Bausatzes lassen sich nun Rundrohre mit Rechteckrohren und Quadratrohren kombinieren. Besonders vorteilhaft an der Erweiterung ist, daß die Quadratrohre ideal in den Rechteckrohren geführt werden können, da die Länge der längeren Profilseiten der Rechteckrohre einem ganzzahligen Vielfachen des äußeren Abstandes der gegenüberliegenden längeren Profilseiten entspricht.

Von besonderem Vorteil ist, daß der Bausatz aus einer ersten Gruppe von Gewindestangen besteht, die metrische Abmessungen aufweisen, in der Stufung M8, M12, M16, M20, wobei jeder Gewindestange ein Rohr mit rechteckigem Profil zugeordnet ist, bei dem der äußere Abstand der sich gegenüberliegenden längeren Profilseiten etwa 3,5 mm mehr als das Nennmaß der zugehörigen Gewindestange mißt und die Länge der längeren Profilseite mindestens einem Vielfachen des äußeren Abstandes der längeren Profilseiten entspricht. Durch die Auswahl dieser Gewindestangen erhält man ein weites Spektrum an zueinander passenden Kombinationsmöglichkeiten.

Gemäß einer weiteren Ausführungsform weist die Rohrwand der zur ersten Gruppe von Gewindestangen gehörenden Rohre mit rechteckigem Profil eine Rohrwandstärke von etwa 1,5 mm auf.

Gemäß einer weiteren vorteilhaften Ausführungsform ist die erste Gruppe von Gewindestangen zusätzlich um eine Gewindestange mit der metrischen Abmessung M5 erweitert, wobei der Gewindestange ein Rohr mit rechteckigem Profil zugeordnet ist, bei dem der äußere Abstand der sich gegenüberliegenden längeren Profilseiten etwa 7,5 mm beträgt und die Länge der längeren Profilseite mindestens einem Vielfachen des äußeren Abstandes der längeren Profilseiten entspricht und die Rohrwand in einer Stärke von etwa 1 mm ausgebildet ist.

Besonders vorteilhaft ist es, daß die erste Gruppe von Gewindestangen um Gewindestangen mit einem Nennmaß von M24 und M30 erweitert ist, denen jeweils ein Rohr mit rechteckigem Profil zugeordnet ist, wobei der äußere Abstand der sich gegenüberliegenden längeren Profilseiten etwa 5,5 mm mehr als das Nennmaß der zugehörigen Gewindestange mißt und die Länge der längeren Profilseite mindestens einem Vielfachen des äußeren Abstandes der längeren Profilseiten entspricht, wobei die Rohrwand in einer Rohrstärke von etwa 2,4 mm ausgebildet ist.

Besonders vorteilhaft ist, daß der Bausatz aus einer zweiten Gruppe von Gewindestangen besteht, die metrische Abmessungen aufweisen, in der Stufung M6, M10, M14 und M18, wobei der äußere Abstand der sich gegenüberliegenden längeren Profilseiten etwa 3,5 mm mehr als das Nennmaß der zugehörigen Gewindestange mißt, und daß die Länge der längeren Profilseite mindestens einem Vielfachen des äußeren Abstandes der längeren Profilseiten entspricht.

Gemäß einer weiteren Ausführungsform weist die Rohrwand der zur zweiten Gruppe von Gewindestangen gehörenden Rohre mit rechteckigem Profil eine Rohrwandstärke von etwa 1,5 mm auf.

Die Kombinationsvielfalt wird weiter erhöht, wenn die zweite Gruppe von Gewindestangen um Gewindestangen mit einem Nennmaß von M22 und M27 erweitert ist, wobei der Gewindestange mit dem Nennmaß M22 ein Rohr mit rechteckigem Profil zugeordnet ist, bei dem der äußere Abstand der gegenüberliegenden längeren Profilseiten etwa 26,5 mm beträgt, und der Gewindestange mit dem Nennmaß M27 ein Rohr mit rechteckigem Profil zugeordnet ist, bei dem der äußere Abstand der gegenüberliegenden längeren Profilseiten etwa 32,5 mm mißt und die Länge der längeren Profilseite mindestens einem Vielfachen des äußeren Abstandes der längeren Profilseiten entspricht.

Gemäß einer besonders vorteilhaften Ausführungsform weist das zur Gewindestange mit dem metrischen Nenndurchmesser M22 gehörende Rohr mit rechteckigem Profil eine Rohrwandstärke von etwa 1,9 mm und das zur Gewindestange mit dem metrischen Nenndurchmesser M27 gehörende Rohr mit rechteckigem Profil eine Rohrwandstärke von etwa 2,4 mm auf.

Ein besonders vorteilhafter Bausatz sieht vor, daß jeder Gewindestange ein U-Profil zugeordnet ist, das die Gewindestange an drei Seiten mit Abstand umschließt und dessen äußere Seiten kürzer als die entsprechenden inneren Seiten des U-Profils der nächst größeren Gewindestangen-U-Profil Zuordnung sind. Durch die Erweiterung des Bausatzes lassen sich nun Rundrohre mit Rechteckrohren, Quadratrohren und U-Profilen kombinieren. Besonders vorteilhaft an der Erweiterung durch die beschriebenen Rohre mit U-Profil ist, daß die Quadratrohre ideal in den U-Profilen geführt werden können, da die Länge der längeren Profilseiten des U-Profils mindestens einem ganzzahligem Vielfachen der Länge der kürzeren Seiten und damit mindestens einem ganzzahligem Vielfachen der Länge des zugehörigen quadratischen Rohres entspricht. Auch besteht die Möglichkeit, Rechteckrohre mit U-Profilen zu kombinieren, da sich die längere Profilseite des U-Profils in ihren Abmessungen genauso verhält, wie die längeren Profilseiten des zugehörigen Rohres mit rechteckigem Profil.

Von besonderem Vorteil ist es, daß der Bausatz aus einer ersten Gruppe von Gewindestangen besteht, die metrische Abmessungen aufweisen, in der Stufung M8, M12, M16 und M20, wobei jeder Gewindestange ein U-Profil zugeordnet ist, bei dem die kürzeren Profilseiten etwa 3,5 mm mehr als das Nennmaß der zugehörigen Gewindestange messen und die Länge der längeren Profilseite mindestens einem Vielfachen der Länge der kürzeren Profilseiten entspricht. Durch die Auswahl dieser Gewindestangen erhält man ein weites Spektrum aus zueinander passenden Kombinationsmöglichkeiten.

Gemäß einer Ausführungsform weist die Wandung der zur ersten Gruppe von Gewindestangen gehörenden U-Profils eine Stärke von etwa 1,5 mm auf.

Gemäß einer weiteren Ausführungsform wird die erste Gruppe von Gewindestangen zusätzlich um eine Gewindestange mit der metrischen Abmessung M5 erweitert, wobei der Gewindestange ein U-Profil zugeordnet ist, bei dem die Länge der kürzeren Profilseiten etwa 7,5 mm beträgt und bei dem die Länge der längeren Profilseite mindestens einem Vielfachen der Länge der kürzeren Profilseiten entspricht und die Wandung in einer Stärke von etwa 1 mm ausgebildet ist.

Um die Kombinationsvielfalt weiter zu erhöhen, wird die erste Gruppe von Gewindestangen um Gewindestangen mit einem Nennmaß von M24 und M30 erweitert, denen jeweils ein U-Profil zugeordnet ist, wobei die kürzeren Profilseiten etwa 5,5 mm mehr als das Nennmaß der zugehörigen Gewindestange messen und bei dem die Länge der längeren Profilseite mindestens einem Vielfachen der Länge der kürzeren Profilseiten entspricht, wobei die Wandung in einer Stärke von etwa 2,4 mm ausgebildet ist.

Von besonderem Vorteil ist, daß der Bausatz aus einer zweiten Gruppe von Gewindestangen besteht, die metrische Abmessungen aufweisen, in der Stufung M6, M10, M14 und M18, wobei jeder Gewindestange ein Rohr mit U-Profil zugeordnet ist, bei dem die kürzeren Profilseiten etwa 3,5 mm mehr als das Nennmaß der zugehörigen Gewindestange messen und die Länge der längeren Profilseite mindestens einem Vielfachen der Länge der kürzeren Profilseiten entspricht.

Gemäß einer weiteren vorteilhaften Ausführungsform weist die Wandung der zur zweiten Gruppe von Gewindestangen gehörenden U-Profile eine Stärke von etwa 1,5 mm auf.

Die Kombinationsvielfalt wird erhöht, indem die zweite Gruppe von Gewindestangen um Gewindestangen mit einem Nennmaß von M22 und M27 erweitert ist, wobei der Gewindestange mit dem Nennmaß M22 ein U-Profil zugeordnet ist, bei dem die Länge der kürzeren Profilseiten etwa 26,5 mm beträgt, und der Gewindestange mit dem Nennmaß M27 ein U-Profil zugeordnet ist, bei dem die Länge der kürzeren Profilseiten etwa 32,5 mm mißt und die Länge der längeren Profilseite mindestens einem Vielfachen der Länge der kürzeren Profilseiten entspricht.

Besonders von Vorteil ist, daß das zur Gewindestange mit dem metrischen Nenndurchmesser M22 gehörende U-Profil eine Wandstärke von etwa 1,9 mm aufweist und daß das zur Gewindestange mit dem metrischen Nenndurchmesser M27 gehörende U-Profil eine Wandstärke von etwa 2,4 mm aufweist.

Gemäß einer weiteren Ausführungsform der Erfindung, weist der Bausatz Rohre mit angeformten Stegen auf, wobei der Steg insbesondere tangential angeordnet ist. Diese Bauweise eignet sich ideal zur Konstruktion von Türscharnieren. Es ist denkbar, die Stege mit Löchern für Schrauben zu versehen, so daß auf einfache Weise Platten, Türen oder ähnliches am Steg angebracht werden können.

Soll die Platte am Gelenk eher mittig befestigt sein, bietet sich eine weitere Ausführungsform der Erfindung an, bei der der Bausatz Rohre mit angeformten Stegen aufweist, wobei der Steg orthogonal auf dem Radius steht.

Gemäß einer weiteren Ausführungsform weist der Bausatz U-Profile und/oder Rohre mit quadratischem oder rechteckigem Profil mit angeformten Stegen auf. Durch die Stege ergeben sich neue Befestigungsmöglichkeiten und Auflageflächen. Die Funktionalität des Bausatzes wird erhöht.

Um die Gleitwirkung zwischen Rohr mit angeformtem Steg und Gewindestange zu erhöhen, ist vorgesehen, daß zwischen Gewindestange und Rohr mit angeformtem Steg ein Reduktionsrohr ein einschiebbar ist. Es wirkt sich besonders vorteilhaft aus, wenn das Reduktionsrohr aus z.B. Kunststoff ausgebildet ist. Die Gleitwirkung wird dadurch wesentlich erhöht.

Gemäß einer vorteilhaften Ausführungsform der Erfindung sind alle Rohre bzw. U-Profile des Bausatzes in zwei Gruppen von Rohren teleskopartig ineinander zusammensetzbar ausgebildet. Dadurch wird die Verlängerung von Rohren erleichtert und es ergeben sich neue konstruktive Möglichkeiten.

Weiterhin beinhaltet die Erfindung ein Verfahren zum knickfreien Biegen von Rohren. Rohre lassen sich nicht ohne spezielle Biegevorrichtungen knickfrei biegen. Das einer bestimmten Gewindestange zugeordnete Rohr wird über die Gewindestange geschoben. Dann wird das Rohr durch Biegen der Gewindestange knickfrei mitgebogen.

Anhand der Zeichnungen, die Ausführungsbeispiele der Erfindung darstellen, wird die Erfindung näher beschrieben.

Es zeigen:
- Fig. 1:: einen Schnitt durch eine Gewindestangen-Rohr Zuordnung als Bestandteil des erfindungsgemäßen Bausatzes, die wiederum durch ein Rohr umhüllt ist,
- Fig. 2:: einen Schnitt durch eine Gewindestangen-Rohr Zuordnung mit quadratischem Profil als Bestandteil des erfindungsgemäßen Bausatzes, die wiederum durch ein Rohr mit quadratischem Profil umhüllt wird,
- Fig. 3:: einen Schnitt durch zwei Gewindestangen-Rohr-Zuordnungen mit quadratischem Profil als Bestandteil des Bausatzes, die wiederum durch ein Rohr mit rechteckigem Profil umhüllt werden,
- Fig. 4:: einen Schnitt durch eine Gewindestangen-Rohr Zuordnung mit U-Profil als Bestandteil des erfindungsgemäßen Bausatzes, die wiederum durch ein Rohr mit U-Profil umhüllt wird,
- Fig. 5:: einen Schnitt durch zwei Gewindestangen-Rohr Zuordnungen mit quadratischem Profil als Bestandteil des Bausatzes, die wiederum von einem U-Profil umhüllt werden,
- Fig. 6:: einen Schnitt von zwei Rohren mit angeformten Stegen,
- Fig. 7:: ein U-Profil mit angeformten Stegen,
- Fig. 8:: ein zwischen Rohr mit angeformtem Steg und Gewindestange eingeschobenes Reduktionsrohr und
- Fig. 9:: ein Kombination aus einem knickfrei gebogenen Rohr mit innenliegender Gewindestange.

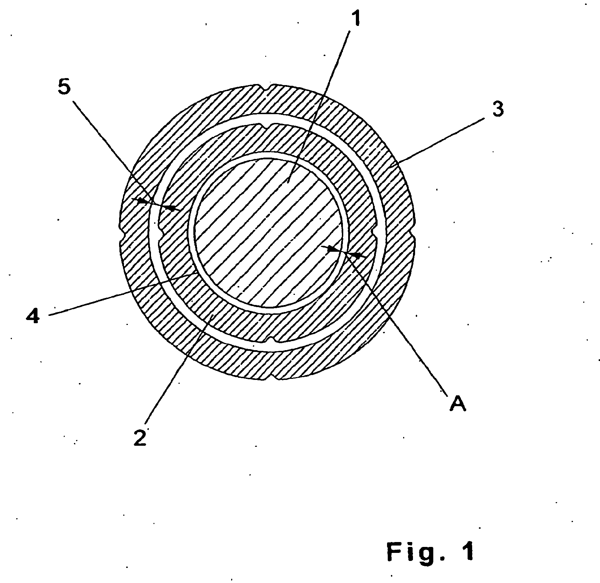

Figur 1 zeigt eine Gewindestange 1 mit metrischem Nennmaß, der ein Rohr 2 zugeordnet ist, dessen Innendurchmesser die Gewindestange mit Abstand A umhüllt und dessen Außendurchmesser kleiner als der Innendurchmesser des Rohres 3 der nächst größeren Gewindestangen-Rohr-Zuordnung ist. Der Abstand A zwischen Gewindestange 1 und Innenwand 4 des Rohres 2 beträgt bei beiden Gruppen von Gewindestangen bei zentrischer Anordnung von M5 bis M20 etwa 0,25 mm, ab M20 etwa 0,35 mm. Die Rohrwandstärke des Rohres für die Gewindestange M5 beträgt etwa 1 mm, die Rohrwandstärke der Rohre für die Gewindestangen M6 bis M20 beträgt etwa 1,5 mm, die Rohrwandstärke des Rohres für die Gewindestange M22 etwa 1,9 mm und die Rohrwandstärke der Rohre für die Gewindestangen M24 bis M30 beträgt etwa 2,4 mm. Das Spiel 5 zu beiden Seiten bei zentrischer Anordnung zwischen den Rohren 2 und 3 beträgt bei den Rohren für die Gewindestangen bis M20 etwa 0,5 mm, ab M22 etwa 0,6 mm.

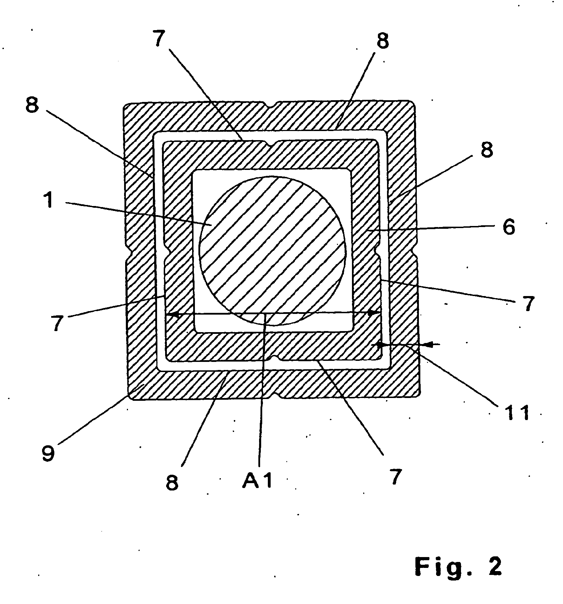

In Figur 2 ist eine Gewindestange 1 dargestellt, der ein Rohr mit quadratischem Profil 6 zugeordnet ist, das die Gewindestange 1 mit Abstand umhüllt. Die äußeren Seiten 7 des Rohrs mit quadratischem Profil 6 sind kürzer als die inneren Seiten 8 des nächst größeren quadratischen Rohrs 9. Der Abstand A1 zweier gegenüberliegender Seiten 7 und die Wandstärke 11 verhalten sich wie der Außendurchmesser bzw. wie die Rohrwandstärke der entsprechenden Rundrohre. Einer Gewindestange mit einem metrischen Nennmaß von M10 ist ein Rundrohr mit einem Außendurchmesser von etwa 13,5 mm zugeordnet. Die gegenüberliegenden Seiten des entsprechenden Rohrs mit quadratischem Profil haben also einen Abstand A1 von etwa 13,5 mm.

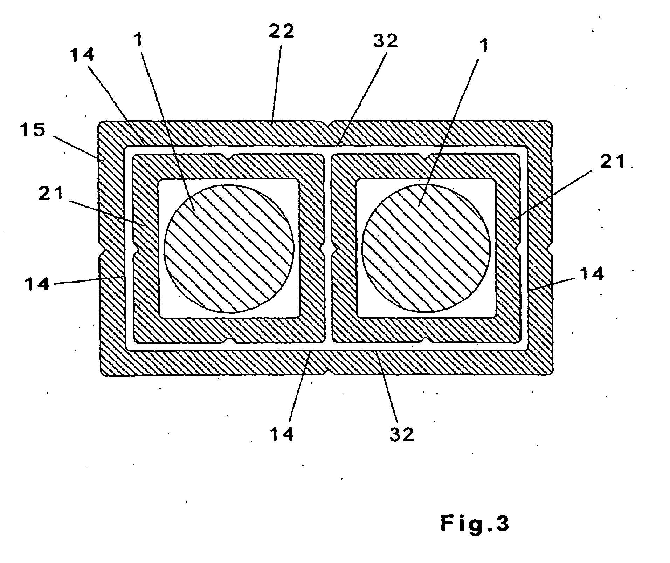

In Figur 3 sind zwei Gewindestangen dargestellt, die metrische Abmessungen aufweisen und denen jeweils ein Rohr mit quadratischem Profil 21 zugeordnet ist, das die Gewindestangen mit Abstand umhüllt. Diese Anordnung wird von einem Rohr 22 mit rechteckigem Querschnitt umhüllt, wobei die Länge der längeren, inneren Profilseiten 32 mindestens einem ganzzahligen Vielfachen der entsprechenden Rohre 21 mit quadratischem Profil entspricht. Einer Gewindestange mit einem Nennmaß von M10 ist ein Rohr mit quadratischem Profil zugeordnet. Die Länge der äußeren Profilseite des Rohres beträgt wie oben beschrieben etwa 13,5 mm. Die Länge der längeren, inneren Profilseiten 32 beträgt also etwa 13,5 mm, 27 mm, 40,5 mm etc..

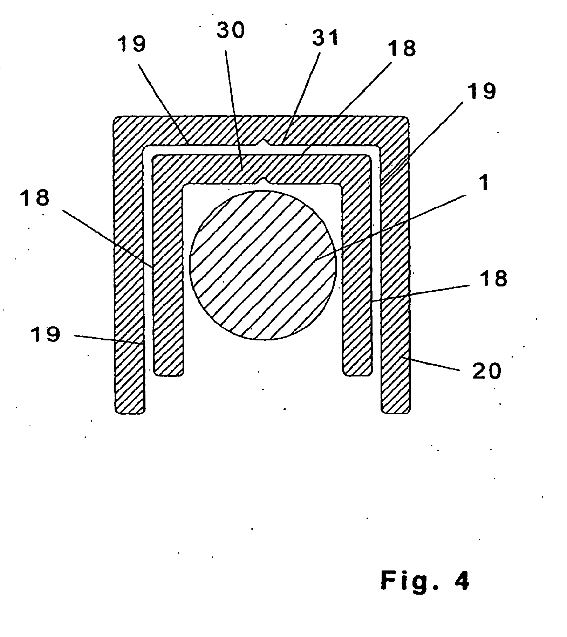

In Figur 4 ist eine Gewindestange 1 dargestellt, der ein U-Profil 30 zugeordnet ist, das die Gewindestange an drei Seiten mit Abstand umhüllt, und dessen äußere Seiten 18 kürzer als die entsprechenden inneren Seiten 19 des nächst größeren U-Profils 20 sind. Weiterhin entspricht die Länge der längeren, inneren Basisseite 31 mindestens einem ganzzahligen Vielfachen der entsprechenden Rohre mit quadratischem Profil. Einer Gewindestange mit einem Nennmaß von M10 ist ein Rohr mit quadratischem Profil zugeordnet. Die Länge der äußeren Profilseite des Rohres beträgt wie oben beschrieben etwa 13,5 mm. Die Länge der längeren, inneren Basisseite 31 beträgt also etwa 13,5 mm, 27 mm, 40,5 mm etc..

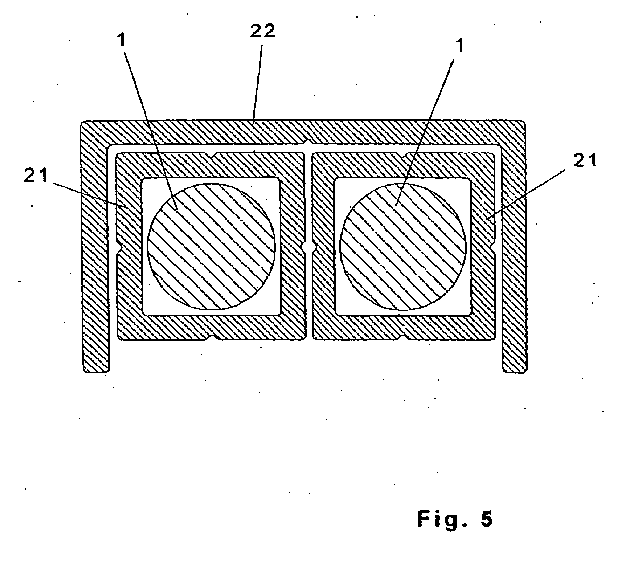

Figur 5 zeigt zwei Gewindestangen 1, denen jeweils ein Rohr mit quadratischem Querschnitt 21 zugeordnet ist, das die jeweilige Gewindestange mit Abstand umschließt. Um die beiden Rohre mit quadratischem Profil ist wiederum ein U-Profil 22 angeordnet. Die Länge der inneren, längeren Seite des U-Profils entspricht etwa der doppelten Länge eines zugehörigen Rohres mit quadratischem Profil 21.

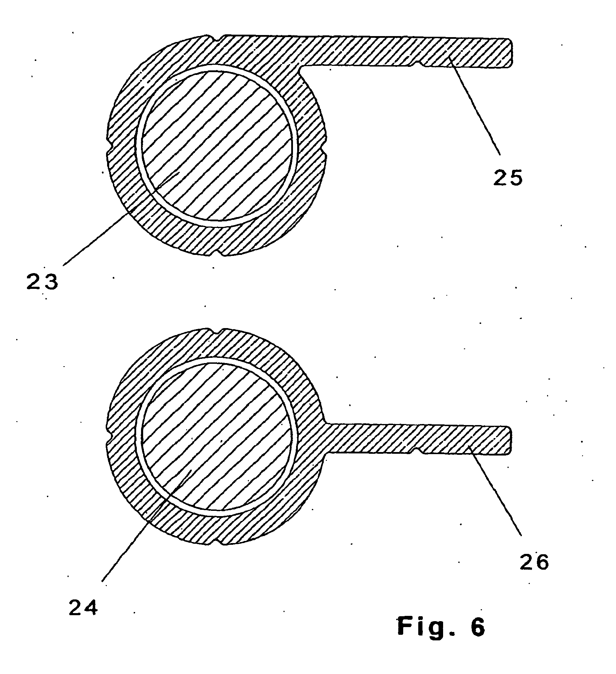

Figur 6 zeigt zwei Gewindestangen 23 und 24. Jeder dieser Gewindestangen 23 und 24 ist ein Rohr mit angeformtem Steg zugeordnet, das die Gewindestangen 23 und 24 mit Abbstand umhüllt. Bei dem der Gewindestange 23 zugeordneten Rohr ist der Steg 25 tangential angeordnet. Bei dem der Gewindestange 24 zugeordneten Rohr steht der Steg 26 orthogonal auf dem Radius des Rohrs.

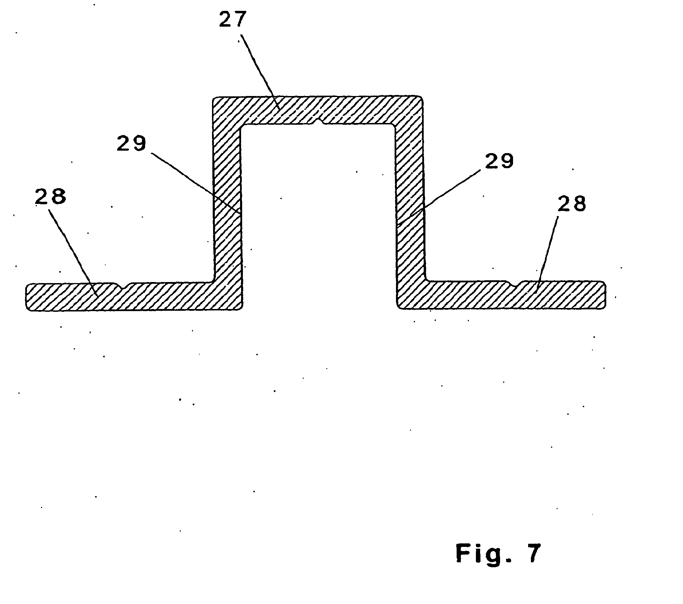

Figur 7 zeigt eine weitere Ausführungsform der im Bausatz enthaltenen Rohre. Hier ist ein U-Profil 27 mit angeformten Stegen 28 dargestellt. In diesem Ausführungsbeispiel liegen die Stege im rechten Winkei zu den Enden der kürzeren Profilseiten 29.

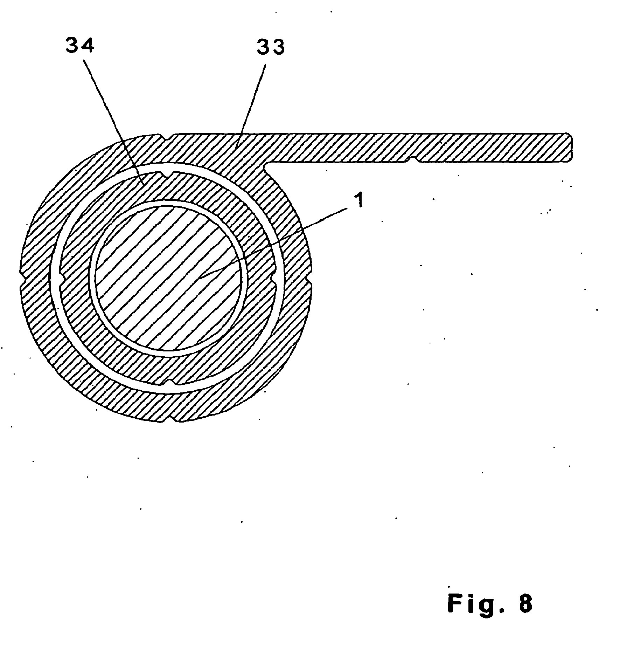

Figur 8 zeigt ein Reduktionsrohr 34, das zur Erhöhung der Gleitwirkung zwischen Gewindestange 1 und Rohr mit angeformtem Steg 33 eingeschoben ist.

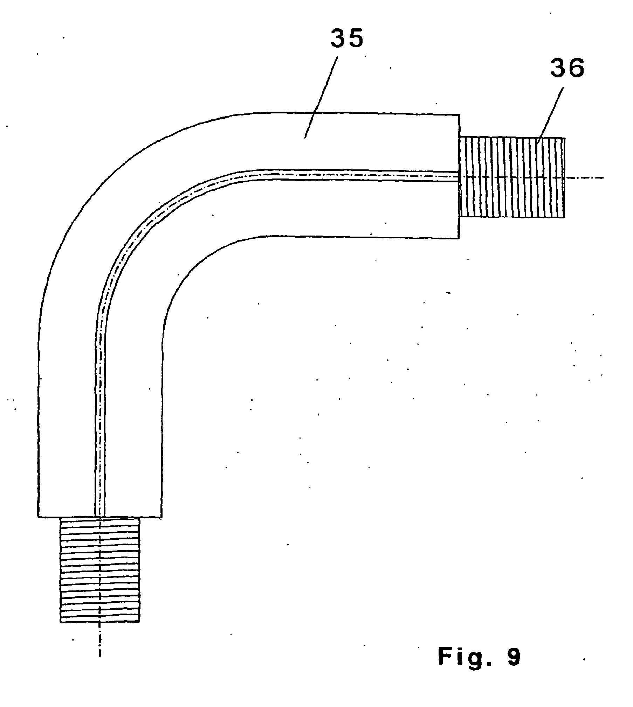

Figur 9 zeigt ein auf eine Gewindestange 26 aufgeschobenes und mit ihr verbogenes Rohr 35.

## Patentansprüche

1. Bausatz bestehend aus mindestens je einer genormten Gewindestange von M5, M6 M8, M10, M12, M14, M16, M18, M20, M22, M24, M27, M30 und mindestens 13 Rohren, wobei einer ersten Gewindestange (1) ein erstes Rohr (2) zugeordnet ist, das die erste Gewindestange (1) mit Abstand umhüllt und das erste Rohr durch ein zweites Rohr (3), das die nächst größere zweite Gewindestange mit Abstand umhüllt, mit einem Spiel (5) umhüllbar ist, wobei der jeweilige Abstand zwischen erster Gewindestange (1) und erstem Rohr (2) von M5 bis M20 etwa 0,25 mm ist und ab M20 etwa 0,35 mm ist und wobei der jeweilige Abstand zwischen erstem Rohr (2) und zweitem Rohr (3) für erste Gewindestangen bis M16 etwa 0,5 mm ist und ab M18 etwa 0,6 mm ist, und wobei die Gewindestangen einer ersten Gruppe, die metrische Abmessungen aufweist, entnommen sind in der Stufung M5 und M8 oder M8 und M12 oder M12 und M16 oder M16 und M20 oder M20 und M24 oder M24 und M30 oder einer zweiten Gruppe, die metrische Abmessungen aufweist, entnommen sind in der Stufung M6 und M10 oder M10 und M14 oder M14 und M18 oder M18 und M22 oder M22 und M27.

2. Bausatz nach Anspruch 1, **dadurch gekennzeichnet, dass** jeder Gewindestange ein Rohr mit rechteckigem Profil zugeordnet ist, bei dem der äußere Abstand der sich gegenüberliegenden längeren Profilseiten etwa 3,5 mm mehr als das Nennmaß der zugehörigen Gewindestange mißt und das die Länge des längeren Profilseite mindestens einem Vielfachen des äußeren Abstandes des längeren Profilseiten entspricht.

3. Bausatz nach Anspruch 1, **dadurch gekennzeichnet, daß** in der Stufung M8, M12, M16 und M20, das Rohr ein um etwa 3,5 mm größeres Außenmaß als das Nennmaß der zugehörigen Gewindestange aufweist.

4. Bausatz nach Anspruch 1 oder 2, **dadurch gekennzeichnet, daß** die Rohrwand eine Rohrwandstärke von etwa 1,5 mm auweist.

5. Bausatz nach einem der Ansprüche 1 oder 2, **dadurch gekennzeichnet, daß** der Gewindestange mit der metrischen Abmessung M5 ein Rohr zugeordnet ist, das ein Außenmaß von etwa 7,5 mm aufweist und die Rohrwand in einer Stärke von etwa 1 mm ausgebildet ist.

6. Bausatz nach einem der Ansprüche 1 oder 2, **dadurch gekennzeichnet, daß** den Gewindestangen mit einem Nennmaß von M 24 und M30 jeweils ein Rohr zugeordnet ist, das ein um etwa 5,5 mm größeres Außenmaß als das Nennmaß der zugehörigen Gewindestange aufweist, wobei die Rohrwand in einer Rohrstärke von etwa 2,4 mm ausgebildet ist.

7. Bausatz nach einem der Ansprüche 1 oder 2, **dadurch gekennzeichnet, daß**
der Gewindestange mit dem Nennmaß M22 ein Rohr mit einem Außenmaß von etwa 26,5 mm zugeordnet ist, und daß der Gewindestange mit dem Nennmaß M27 ein Rohr mit einem Außenmaß von etwa 32,5 mm zugeordnet ist und
das Rohr mit einem Außenmaß von 26,5 mm eine Rohrwandstärke von etwa 1,9 mm aufweist und daß das Rohr mit einem Außenmaß von etwa 32,5 mm eine Rohrwandstärke von etwa 2,4 mm aufweist.

8. Bausatz nach Anspruch 1, 3 bis 7, **dadurch gekennzeichnet, daß** das Rohr (6) ein quadratisches Profil aufweist.

9. Bausatz bestehend aus mindestens je einer genormten Gewindestange von von M5, M6 M8, M10, M12, M14, M16, M18, M20, M22, M24, M27, M30 und mindestens 13 U-Profilen, wobei einer ersten Gewindestange (1) ein erstes U-Profil (30) zugeordnet ist, das die erste Gewindestange (1) an drei Seiten mit Abstand umschließt und dessen äußere Seiten (18) kürzer als die entsprechenden inneren Seiten (19) des U-Profils der nächst größeren Gewindestangen-U-Profil-Zuordnung sind und das erste U-Profil durch ein zweites U-Profil, das die nächst größere zweite Gewindestange mit Abstand umhüllt, mit einem Spiel (5) umhüllbar ist; wobei der jeweilige Abstand zwischen erster Gewindestange (1) und erstem U-Profil (2) von M5 bis M20 etwa 0,25 mm ist und ab M20 etwa 0,35 mm ist und wobei der jeweilige Abstand zwischen erstem U-Profil (2) und zweitem U-Profil (3) für erste Gewindestangen bis M16 etwa 0,5 mm ist und ab M18 etwa 0,6 mm ist und wobei die Gewindestangen einer ersten Gruppe, die metrische Abmessungen aufweist, entnommen sind in der Stufung M5 und M8 oder M8 und M12 oder M12 und M16 oder M16 und M20 oder M20 und M24 oder M24 und M30 oder einer zweiten Gruppe, die metrische Abmessungen aufweist, entnommen sind in der Stufung M6 und M10 oder M10 und M14 oder M14 und M18 oder M18 und M22 oder M22 und M27.

10. Bausatz nach Anspruch 9, **dadurch gekennzeichnet, daß** in der Stufung M8, M12, M16, M20, das U-Profil die kürzeren Profilseiten etwa 3,5 mm mehr als das Nennmaß der zugehörigen Gewindestange messen und daß die Länge der längeren Profilseite mindestens einem Vielfachen der Länge der kürzeren Profilseiten entspricht.

11. Bausatz nach Anspruch 9 oder 10, **dadurch gekennzeichnet, daß** die Wandung der U-profile eine Stärke von etwa 1,5 mm auweist.

12. Bausatz nach einem der Ansprüche 9 bis 11, **dadurch gekennzeichnet, daß** der Gewindestange M5 ein U-Profil zugeordnet ist, bei dem die Länge der kürzeren Profilseiten etwa 7,5 mm beträgt und bei dem die Länge der längeren Profilseite mindestens einem Vielfachen der Länge der kürzeren Profilseiten entspricht und die Wandung in einer Starke von etwa 1 mm ausgebildet ist.

13. Bausatz nach einem der Ansprüche 9 bis 12, **dadurch gekennzeichnet, daß** den Gewindestangen mit einem Nennmaß von M24 und M30 jeweils ein U-Profil zugeordnet ist, deren kürzeren Profilseiten etwa 5,5 mm mehr als das Nennmaß der zugehörigen Gewindestange messen und bei dem die Länge der längeren Profilseite mindestens einem Vielfachen der Länge der kürzeren Profilseiten entspricht, wobei die Wandung in einer Stärke von etwa 2,4 mm ausgebildet ist.

14. Bausatz nach einem der Ansprüche 9 bis 13, **dadurch gekennzeichnet, daß** in der Stufung M6, M10, M14 und M18, die kürzeren Profilseiten des U-Profils etwa 3,5 mm mehr als das Nennmaß der zugehörigen Gewindestange messen, und daß die Länge der längeren Profilseite mindestens einem Vielfachen der Länge der kürzeren Profilseiten entspricht.

15. Bausatz nach einem der Ansprüche 9 bis 14 **dadurch gekennzeichnet, daß** der Gewindestange mit dem Nennmaß M22 ein U-Profil zugeordnet ist, bei dem die Länge der kürzeren Profilseiten etwa 26,5 mm beträgt und daß der Gewindestange mit dem Nennmaß M27 ein U-Profil zugeordnet ist, bei dem die Länge der kürzeren Profilseiten etwa 32,5 mm mißt, und daß die Länge der längeren Profilseite mindestens einem Vielfachen der Länge der kürzeren Profilseiten entspricht.

16. Bausatz nach einem der Ansprüche 9 bis 15, **dadurch gekennzeichnet, daß** das zur Gewindestange mit dem metrischen Nenndurchmesser M22 gehörende U-Profil eine Wandstärke von etwa 1,9 mm aufweist und daß das zur Gewindestange mit dem metrischen Nenndurchmesser M27 gehörende U-Profil eine Wandstärke von etwa 2,4 mm aufweist.

17. Bausatz nach einem der Ansprüche 1 bis 16, **dadurch gekennzeichnet, daß** der Bausatz U-Profile und/oder Rohre mit angeformten Stegen (25) aufweist, wobei der Steg (25) insbesondere tangential angeordnet ist.

18. Bausatz nach einem der Ansprüche 1 bis 17, **dadurch gekennzeichnet, daß** der Bausatz U-Profile und/oder Rohre mit angeformten Stegen (26) aufweist, wobei der Steg (26) orthogonal auf dem Radius steht.

19. Bausatz nach einem der Ansprüche 1 bis 18, **dadurch gekennzeichnet, daß** der Bausatz U-Profile (27) und/oder Rohre mit quadratischem oder rechteckigem Profil mit angeformten Stegen (28) aufweist.

20. Bausatz nach einem der Ansprüche 17 oder 18, **dadurch gekennzeichnet, daß** zwischen Gewindestange (1) und Rohr mit angeformtem Steg (33) ein Reduktionsrohr (34) einschiebbar ist.

21. Bausatz nach einem der Ansprüche 1 bis 20, **dadurch gekennzeichnet, daß** alle Rohre bzw. U-Profile des Bausatzes in zwei Gruppen von Rohren teleskopartig ineinander zusammensetzbar ausgebildet sind.

## Claims

1. A kit consisting of at least one standardised threaded rod in each of the dimensions M5, M6, M8, M10, M12, M14, M16, M18, M20, M22, M24, M27, M30 and at least 13 pipes, wherein a first pipe (2) is associated with the first threaded pipe (1), which pipe envelopes the first threaded rod (1) by a certain distance and the first pipe may be enveloped with a clearance (5) by a second pipe (3) which envelopes the next larger second threaded rod by a certain distance, wherein the respective distance between the first threaded rod (1) and a first pipe (2) from M5 to M20 is approximately 0.25 mm, and from M20 is approximately 0.35 mm, wherein the respective distance between the first pipe (2) and the second pipe (3) for threaded rods up to M16 is approximately 0.5 mm and from M18 is approximately 0.6 mm, and wherein the threaded rods are taken from a first group which has metric dimensions in the classification M5 and M8, or M8 and M12, or M12 and M16, or M16 and M20, or M20 and M24, or M24 and M30, or are taken from a second group which has metric dimensions in the classification M6 and M10, or M10 and M14, or M14 and M18, or M18 and M22 or M22 and M27.

2. The kit according to Claim 1, **characterised in that** a pipe with a rectangular profile is associated with each threaded rod, wherein the outer distance between the opposing longer profile sides measures approximately 3.5 mm more than the nominal dimension of the associated threaded rods, and wherein the length of the longer profile side is equal to at least a multiple of the outer distance between the longer profile sides.

3. The kit according to Claim 1, **characterised in that** in the classification M8, M12, M16 and M20 the pipe has an outside dimension that is approximately 3.5 mm larger than the nominal dimension of the associated threaded rod.

4. The kit according to Claim 1 or 2, **characterised in that** the pipe wall has a pipe wall thickness of approximately 1.5 mm.

5. The kit according to any one of Claims 1 or 2, **characterised in that** a pipe is associated with the threaded rod with the metric dimension M5, which pipe has an outside dimension of approx. 7.5 mm and the pipe wall is designed with a thickness of approx. 1 mm.

6. The kit according to any one of Claims 1 or 2, **characterised in that** a pipe is associated with each of the threaded rods with a nominal dimension of M24 and M30, which pipe has an outside dimension which is approximately 5.5 mm larger than the nominal dimension of the associated threaded rod, wherein the pipe wall is designed with a pipe thickness of approximately 2.4 mm.

7. The kit according to any one of Claims 1 or 2, **characterised in that** a pipe with an outside dimension of approximately 26.5 mm is associated with the threaded rod with the nominal dimension M22, and **in that** a pipe with an outside dimension of approximately 32,5 mm is associated with the threaded rod with the nominal dimension M27 and the pipe with an outside dimension of 26.5 mm has a pipe wall thickness of approximately 1.9 mm, and **in that** the pipe with an outside dimension of approximately 32.5 mm has a pipe wall thickness of approximately 2.4 mm.

8. The kit according to any one of Claims 1 and 3 to 7, **characterised in that** the pipe (6) has a quadratic profile.

9. The kit consisting of at least one standardised threaded rod in each of the dimensions M5, M6, M8, M10, M12, M14, M16, M18, M20, M22, M24, M27, M30 and at least 13 U-profiles, wherein a first U-profile (30) is associated with a first threaded rod (1), which U-profile envelopes the first threaded rod (1) on three sides by a certain distance, and whose outer sides (18) are shorter than the corresponding inner sides (19) of the U-profile of the next largest threaded rod-U-profile association and the first U-profile may be enveloped with a clearance (5) by a second U-profile which envelopes the next largest second threaded rod by a certain distance, wherein the respective distance between the first threaded rod (1) and the first U-profile (2) from M5 to M20 is approximately 0.25 mm, and from M20 is approximately 0.35 mm, and wherein the respective distance between the first U-profile (2) and the second U-profile (3) for threaded rods up to M16 is approximately 0.5 mm and from M18 is approximately 0.6 mm, and wherein the threaded rods are taken from a first group which has metric dimensions in the classification M5 and M8 or M8 and M12 or M12 and M16 or M16 and M20 or M20 and M24 or M24 and M30, or from a second group which has metric dimensions in the classification M6 and M10 or M10 and M14 or M14 and M18 or M18 and M22 or M22 and M27.

10. The kit according to Claim 9, **characterised in that** in the classification M8, M12, M16, and M20 the shorter profile sides measure approx. 3.5 mm more than the nominal dimension of the associated threaded rod, and **in that** the length of the longer profile side is at least equal to a multiple of the length of the shorter profile sides.

11. The kit according to Claim 9 or 10, **characterised in that** the wall of the U-profiles has a thickness of approx. 1,5 mm.

12. The kit according to any of claims 9 to 11, **characterised in that** a U-profile is associated with threaded rod M5, wherein the length of the shorter profile sides is approx. 7.5 mm and wherein the length of the longer profile side is equal to at least a multiple of the length of the shorter profile sides and the wall is designed with a thickness of approx. 1 mm.

13. The kit according to any one of Claims 9 to 12, **characterised in that** a U-profile is associated with each of the threaded rods with a nominal dimension of M24 and M30, the shorter sides of which profile measure approx. 5,5 mm more than the nominal dimension of the associated threaded rod, and where the length of the longer profile side is equal to at least a multiple of the length of the shorter profile sides, wherein the wall is designed with a thickness of approx. 2.4 mm.

14. The kit according to any one of Claims 9 to 13, **characterised in that** the shorter profile sides of the U-profile measure approx. 3.5 mm more than the nominal dimension of the associated threaded rod, and **in that** the length of the longer profile side is equal to at least a multiple of the length of the shorter profile sides.

15. The kit according to any one of Claims 9 to 15, **characterised in that** a U-profile is associated with the threaded rod with the nominal dimension M22, where the length of the shorter profile sides is approx. 26,5 mm, **in that** a U-profile is associated with the threaded rod with the nominal dimension M27, where the length of the shorter profile sides measures approx. 32.5 mm, and **in that** the length of the longer profile side is equal to at least a multiple of the length of the shorter profile sides.

16. The kit according to any one of Claims 1 to 15, **characterised in that** the U-profile belonging to the threaded rod with the metric nominal diameter M22 has a wall thickness of approx. 1,9 mm, and **in that** the U-profile belonging to the threaded rod with the metric nominal diameter M22 has a wall thickness of approx. 2.4 mm.

17. The kit according to any one of Claims 1 to 16, **characterised in that** the kit has U-profiles and/or pipes with shaped on webs (25), wherein the web (25) is arranged tangentially in particular.

18. The kit according to any one of Claims 1 to 17, **characterised in that** the kit has U-profiles and/or pipes with shaped on webs (26), wherein the web (26) stands orthogonally to the radius.

19. The kit according to any one of Claims 1 to 18, **characterised in that** the kit has U-profiles (27) and/or pipes with a quadratic or rectangular profile with shaped on webs (28).

20. The kit according to any one of Claims 17 or 18, **characterised in that** a reduction pipe (34) can be inserted between the threaded rod (1) and the pipe with the shaped on web (33).

21. The kit according to any one of Claims 1 to 20, **characterised in that** all the pipes and/or U-profiles of the kit are designed in two groups of pipes so that they can be fitted telescopically into each other.

## Revendications

1. Kit composé d'au moins chaque fois une tige filetée normalisée de M5, M6, M8, M10, M12, M14, M16, M18, M20, M22, M24, M27, M30 et d'au moins 13 tubes, un premier tube (2) enveloppant la première tige filetée (1) à distance étant associé à la première tige filetée (1) le premier tube pouvant être enveloppé avec un jeu (5) par un deuxième tube (3) qui enveloppe à distance la deuxième tige filetée de taille immédiatement supérieure, la distance respective entre une première tige filetée (1) et un premier tube (2) de M5 à M20 étant d'environ 0,25 mm et à partir de M20 d'environ 0,35 mm et la distance respective entre le premier tube (2) et le deuxième tube (3) étant d'environ 0,5mm pour des premières tiges filetées jusqu'à M16 et d'environ 0,6 mm à partir de M18 et les tiges filetées étant prélevées dans un groupe présentant des dimensions métriques dans la gradation M5 et M8 ou M8 et M12 ou M12 et M16 ou M16 et M20 ou M20 et M24 ou M24 et M30 ou étant prélevées dans un deuxième groupe présentant des dimensions métriques, dans la gradation M6 et M10 ou M10 et M14 ou M 14 et M18 ou M18 et M 22 ou M22 et M 27.

2. Kit selon la revendication 1, **caractérisé en ce qu'**à chaque tige filetée est associé un tube avec un profil rectangulaire, sur lequel la distance extérieure des côtés de profil les plus longs mutuellement opposés mesure environ 3,5 mm de plus que la dimension nominale de la tige filetée associée et **en ce que** la longueur du côté de profil le plus long correspond au moins à un multiple des distances extérieures des côtés de profil les plus longs.

3. Kit selon la revendication 1, **caractérisé en ce que** dans la gradation M8, M12, M16 et M20, le tube présente une dimension extérieure supérieure d'environ 3,5 mm à la dimension nominale de la tige filetée associée.

4. Kit selon les revendications 1 ou 2, **caractérisé en ce que** la paroi du tube présente une épaisseur de paroi de tube d'environ 1,5 mm.

5. Kit selon l'une quelconque des revendications 1 ou 2, **caractérisé en ce qu'**un tube présentant une dimension extérieure d'environ 7,5 mm est associé à la tige filetée avec la dimension métrique M5 et **en ce que** la paroi de tube est conçue avec une épaisseur d'environ 1 mm.

6. Kit selon l'une quelconque des revendications 1 ou 2, **caractérisé en ce que** respectivement un tube présentant une dimension extérieure supérieure d'environ 5,5 mm à la dimension nominale de la tige filetée correspondante est associé aux tiges filetées d'une dimension nominale de M24 et M30, la paroi de tube étant conçue dans une épaisseur de tube d'environ 2,4 mm.

7. Kit selon l'une quelconque des revendications 1 ou 2, **caractérisé en ce qu'**un tube avec une dimension extérieure d'environ 26,5 mm est associé à la tige filetée de dimension nominale M22 et **en ce qu'**un tube d'une dimension extérieure d'environ 32,5 mm est associé à la tige filetée de dimension nominale M27 et **en ce que** le tube d'une dimension extérieure de 26,5 mm présente une épaisseur de paroi de tube d'environ 1,9 mm et **en ce que** le tube d'une dimension extérieure d'environ 32,5 mm présente une épaisseur de paroi d'environ 2,4 mm.

8. Kit selon l'une quelconque des revendications 1, 3 à 7, **caractérisé en ce que** tube (6) présente un profil quadratique.

9. Kit composé d'au moins chaque fois une tige filetée normalisée de M5, M6, M8, M10, M12, M14, M16, M18, M20, M22, M24, M27, M30 et d'au moins 13 profils en U, un premier profil en U (30) qui enveloppe la première tige filetée (1) à distance sur trois côtés et dont les côtés extérieurs (18) sont plus courts que les côtés intérieurs (19) correspondants du profilé en U de l'association tige filetée/profil en U de taille immédiatement supérieure étant associé à la première tige filetée normalisée (1) et le profil en U pouvant être enveloppé avec un jeu (5) par un deuxième profil en U qui enveloppe à distance la deuxième tige filetée d'une dimension immédiatement supérieure, la distance respective entre une première tige filetée (1) et un premier profil en U de M5 à M20 étant d'environ 0,25 mm et d'environ 0,35 mm à partir de M20 et la distance respective entre le premier profil en U (2) et le deuxième profil en U (3) étant d'environ 0,5 mm pour des tiges filetées jusqu'à M16 et d'environ 0,6 mm à partir de M18 et les tiges filetées étant prélevées dans un premier groupe présentant des dimensions métriques dans la gradation M5 et M8 ou M8 et M12 ou M12 et M16 ou M16 et M20 ou M20 et M24 ou M24 et M30 ou prélevées dans un deuxième groupe présentant des dimensions métriques dans la gradation M6 et M10 ou M10 et M14 ou M 14 et M18 ou M18 et M 22 ou M22 et M27.

10. Kit selon la revendication 9, **caractérisé en ce que** sur le profil en U dans la gradation M8, M12, M16 et M20, les côtés les plus courts du profil mesurent environ 3,5 mm de plus que la dimension nominale de la tige filetée correspondante et **en ce que** la longueur du côté le plus long du profil correspond au moins à un multiple de la longueur des côtés les plus courts du profil.

11. Kit selon la revendication 9 ou 10, **caractérisé en ce que** la paroi des profils en U présente une épaisseur d'environ 1,5 mm,

12. Kit selon l'une quelconque des revendications 9 à 11, **caractérisé en ce qu'**un profil en U sur lequel la longueur des côtés les plus courts du profil est d'environ 7,5 mm et sur lequel la longueur des côtés les plus longs du profil correspond au moins à un multiple des côtés les plus courts du profil est associé à la tige filetée M5 et **en ce que** la paroi est conçue dans une épaisseur d'environ 1 mm.

13. Kit selon l'une quelconque des revendications 9 à 12, **caractérisé en ce qu'**un profil en U, dont les côtés les plus courts du profil mesurent environ 5,5 mm de plus que la dimension nominale de la tige filetée correspondante et sur lequel la longueur du côté le plus long du profil correspond au moins à un multiple de la longueur des côtés les plus courts du profil est associé aux tiges filetées d'une dimension nominale de M24 et M30, la paroi étant conçue dans une épaisseur d'environ 2,4 mm.

14. Kit selon l'une quelconque des revendications 9 à 13, **caractérisé en ce que** dans la gradation M6, M10, M14 et M18, les côtés les plus courts du profil en U mesurent environ 3,5 mm de plus que la dimension nominale de la tige filetée correspondante et **en ce que** la longueur du côté le plus long du profil correspond au moins à un multiple de la longueur des côtés les plus courts du profil.

15. Kit selon l'une quelconque des revendications 9 à 14, **caractérisé en ce qu'**un profil en U sur lequel la longueur des côtés les plus courts du profil est d'environ 26,5 mm est associé à la tige filetée avec la dimension nominale M22 et **en ce qu'**un profil en U sur lequel la longueur des côtés les plus courts du profil mesure environ 32,5 mm est associé à la tige filetée avec la dimension nominale M27 et **en ce que** la longueur du côté le plus long du profil correspond au moins à un multiple de la longueur des côtés les plus courts du profil.

16. Kit selon l'une quelconque des revendications 1 à 15, **caractérisé en ce que** le profil en U correspondant à la tige filetée avec un diamètre nominal métrique M22 présente une épaisseur de paroi d'environ 1,9 mm et **en ce que** le profil en U correspondant à la tige filetée avec le diamètre nominal métrique M27 présente une épaisseur de paroi d'environ 2,4 mm.

17. Kit selon l'une quelconque des revendications 1 à 16, **caractérisé en ce que** le kit comporte des profils en U et/ou des tubes avec des nervures (25) formées par moulage, la nervure (25) étant disposée notamment de façon tangentielle.

18. Kit selon l'une quelconque des revendications 1 à 17, **caractérisé en ce que** le kit comporte des profils en U et/ou des tubes avec des nervures (26) formées par moulage, la nervure (26) étant disposée de façon orthogonale.

19. Kit selon l'une quelconque des revendications 1 à 18, **caractérisé en ce que** le kit comporte des profils en U (27) et/ou des tubes avec un profil quadratique ou rectangulaire avec des nervures (28) formées par moulage.

20. Kit selon l'une quelconque des revendications 17 ou 18, **caractérisé en ce qu'**un tube réducteur (34) peut être inséré entre la tige filetée (1) et le tube avec une nervure (33) formée par moulage.

21. Kit selon l'une quelconque des revendications 1 à 20, **caractérisé en ce que** tous les tubes ou profils en U du kit sont conçus de façon à pouvoir être assemblés de façon télescopique les uns dans les autres.
